# FASCICULE DE BREVET EUROPEEN

(11) **EP 2 465 742 B1**
(45) Date de publication et mention de la délivrance du brevet: **02.12.2015**
(21) Numéro de dépôt: 11192946.9
(22) Date de dépôt: 12.12.2011
(51) Int. Cl.: B60T 11/232, B60T 13/52, B60T 13/565

(54) **Servomoteur pneumatique d'assistance de freinage d'un véhicule avec conservation du ressenti au niveau de la pédale de frein**
Pneumatischer Hilfsservomotor zum Bremsen eines Fahrzeugs mit Empfindungserhaltung am Bremspedal
Pneumatic servomotor for braking assistance of a vehicle, retaining the feeling in the brake pedal

(30) Priorité: 15.12.2010 FR 1004902
(43) Date de publication de la demande: 20.06.2012
(73) Titulaire: Robert Bosch GmbH, 70442 Stuttgart (DE)
(72) Inventeur: Cagnac, Bastien, 60660 Cramoisy (FR); Sprocq, Raynald, 77450 Esbly (FR)

(56) Documents cités:
- FR-A1- 2 770 475
- US-A- 5 056 313
- US-A1- 2005 099 062

## Description

L'invention concerne un servomoteur pneumatique d'assistance de freinage d'un véhicule, notamment d'un véhicule automobile. L'invention a pour but de diminuer la consommation en énergie d'un tel véhicule tout en conservant une course réduite à la pédale de frein et un effort élevé produit par ledit servomoteur.

Un servomoteur pneumatique d'assistance de freinage comporte une chambre avant connectable à une source de vide, une chambre arrière connectable à une arrivée haute pression, typiquement la pression atmosphérique, et une cloison mobile étanche disposée entre les deux chambres. Le servomoteur comporte également une tige de poussée reliée mécaniquement à une pédale de frein disposée à l'entrée du servomoteur. Un circuit hydraulique de freinage est branché en sortie du servomoteur. Des servomoteurs sont décrits dans US 2005/099062, US 5 056 313 et FR 2 770 475.

Le servomoteur comporte un équipage mobile qui peut être emporté par l'intermédiaire de la tige de poussée et par la cloison mobile en direction du circuit hydraulique de freinage.

Typiquement, le circuit hydraulique de freinage comporte un maître cylindre, au moins un conduit hydraulique et au moins un dispositif de freinage du véhicule. Le maître cylindre comporte une chambre hydraulique primaire et un piston primaire coulissant dans ladite chambre hydraulique primaire. Le conduit relie intérieurement la chambre hydraulique primaire au dispositif de freinage. Le dispositif de freinage peut être du type frein à disque ou frein à tambour et est destiné à freiner une roue du véhicule. Le dispositif de freinage comporte une garniture de frein et une surface de frottement. Par exemple, la garniture de frein peut être montée fixe par rapport à la roue tandis que la surface de frottement est montée liée en rotation à la roue. Suite à une pression hydraulique générée par le maître cylindre, la garniture de frein est appliquée contre la surface de frottement afin d'entraîner le ralentissement de la rotation, voir l'arrêt en rotation de la roue du véhicule sur laquelle est relié ce dispositif de freinage.

Le fluide hydraulique remplissant la chambre primaire, rempli également le conduit du circuit hydraulique de freinage jusqu'au dispositif de freinage.

Pour réduire les dégagements de carbone produit par les véhicules, il est prévu d'agir au niveau du dispositif de freinage. Notamment, il est prévu d'écarter la garniture de frein de sa surface de frottement jusqu'à ce que plus aucun couple de frottement ne se forme entre la garniture de frein et la surface de frottement en position de repos. Par position de repos on entend position de la garniture de frein par rapport à sa surface de frottement, lorsque le véhicule n'est pas en phase de freinage.

Le problème posé par ce type de mesure, est que, au moment d'un freinage du véhicule, on augmente une durée de rattrapage de course morte du véhicule du fait que la distance entre une surface de contact d'une garniture de frein donnée et la surface de frottement a été augmentée. Or, l'augmentation de la longueur de la course morte retarde le freinage, ce qui n'est pas acceptable.

C'est l'un des buts de la présente invention que de proposer une solution pour réduire la longueur de cette course morte sans nuire à la contrainte liée à un écartement imposé de la garniture de frein de sa surface de frottement pour réduire l'émission de carbone.

C'est un autre but de la présente invention que de proposer une solution qui ne nécessite pas une transformation importante du servomoteur.

C'est encore un autre but de la présente invention que de prévoir de réduire la consommation en énergie tout en conservant l'effort de freinage fourni par le servomoteur et tout en conservant le faible effort nécessaire à fournir à la pédale de frein pour générer un tel effort de freinage.

L'invention permet donc d'écarter les garnitures de frein de leur surface de frottement d'une distance dont il résulte que le véhicule ne consommera pas en excès de l'énergie du fait de la position des garnitures de frein par rapport à leur surface de frottement.

Plus précisément, dans l'invention, il est prévu un dispositif interne d'absorption de jeux qui fonctionne en pression au lieu de fonctionner en volume.

L'invention prévoit de réaliser une chambre supplémentaire formée par le servomoteur et communiquant avec le circuit hydraulique de freinage par un canal. Le canal relie intérieurement la chambre supplémentaire à la chambre primaire du maître cylindre. Ainsi, la chambre supplémentaire est remplie du même fluide hydraulique que celui remplissant la chambre primaire du maître cylindre.

Au fur et à mesure que la tige de poussée est enfoncée, le volume de la chambre supplémentaire se réduit jusqu'à l'obtention d'une pression hydraulique seuil qui correspond à la pression nécessaire dans le circuit hydraulique de freinage pour combler tous les jeux. Avant que la pression seuil soit obtenue, la jupe est déplacée indépendamment de l'équipage mobile. Au moment où la pression hydraulique seuil est atteinte, la jupe est reliée à l'équipage mobile pour former un corps unique qui se déplace d'un seul tenant.

Pour commander la fermeture du canal, une valve est prévue montée sur le canal. Cette valve commande la fermeture du canal lorsque la pression hydraulique seuil relevée dans la chambre primaire a été atteinte. Plus précisément, c'est la pression hydraulique s'exerçant sur ladite valve qui va commander son déplacement afin d'autoriser la fermeture duit canal.

L'invention a donc pour objet un servomoteur d'assistance de freinage d'un véhicule apte à être relié à un maître cylindre dudit véhicule, ledit servomoteur comportant
- une tige de poussée,
- un équipage mobile,
- une jupe étanche,
- une chambre avant et une chambre arrière séparées par la jupe de manière étanche, la tige de poussée étant reliée à une pédale de frein par une extrémité et à l'équipage mobile par une extrémité opposée, ledit équipage mobile coulissant de manière étanche au travers de la jupe tout en étant relié à un piston primaire du maître cylindre, la jupe étanche étant déplacée en direction du maître cylindre après appui sur la pédale de frein, caractérisé en ce qu'il comporte
- un réservoir de fluide hydraulique communiquant avec l'intérieur d'une chambre primaire du maître cylindre via un canal, et
- un moyen de fermeture du canal dont le fonctionnement est dépendant de la pression hydraulique régnant dans la chambre primaire.

L'invention permet un réglage en pression plutôt qu'un réglage en volume.

L'invention permet avantageusement de faire rentrer une plus faible quantité d'air dans le servomoteur.

L'invention permet également avantageusement de ne pas appuyer sur une trop longue distance sur la pédale de frein pour obtenir la pression souhaitée.

L'invention présente en outre les caractéristiques suivantes :
- le réservoir est formé par la jupe et l'équipage mobile, la jupe et l'équipage mobile coulissants l'un par rapport à l'autre tout en délimitant un espace dont le volume varie en fonction de la position de la jupe rigide par rapport à celle de l'équipage mobile.

L'invention permet ainsi avantageusement de ne pas encombrer davantage le servomoteur et l'environnement du servomoteur et du maître cylindre.
- l'équipage mobile comporte un corps cylindrique au travers duquel est formé le canal, ledit canal débouchant depuis le réservoir vers la chambre primaire au travers du piston primaire,
- le moyen de fermeture du canal est formé par une valve qui est montée sur le corps et qui est déplaçable au-delà d'une pression hydraulique seuil s'exerçant sur ladite valve de manière à entraîner la fermeture du canal.
- la valve est placée sur le canal et est formée par une pièce coulissante et par des moyens élastiques, lesdits moyens élastiques étant configurés de telle manière qu'ils maintiennent la pièce coulissante en appui contre le corps pour autoriser l'ouverture du canal, et qu'ils autorisent le déplacement de la pièce coulissante pour fermer le canal au-delà d'une pression hydraulique seuil s'exerçant sur ladite pièce coulissante.
- les moyens élastiques sont formés par un ressort situé entre le corps et la pièce coulissante.

L'invention sera mieux comprise à la lecture de la description qui suit et à l'examen des figures qui l'accompagnent. Celle-ci n'est présentée qu'à titre indicatif et nullement limitatif de l'invention.
Figure 1 : Une représentation schématique en coupe longitudinale d'un servomoteur pneumatique d'assistance de freinage d'un véhicule en position de repos, selon l'invention ;
Figures 2 à 4 : Des représentations schématiques en coupe longitudinale d'un servomoteur pneumatique d'assistance de freinage d'un véhicule au moment où le conducteur appuie sur la pédale de frein, selon l'invention ;
Figure 5 : Une représentation schématique d'un servomoteur pneumatique d'assistance de freinage d'un véhicule en fin de freinage du véhicule, selon l'invention ;

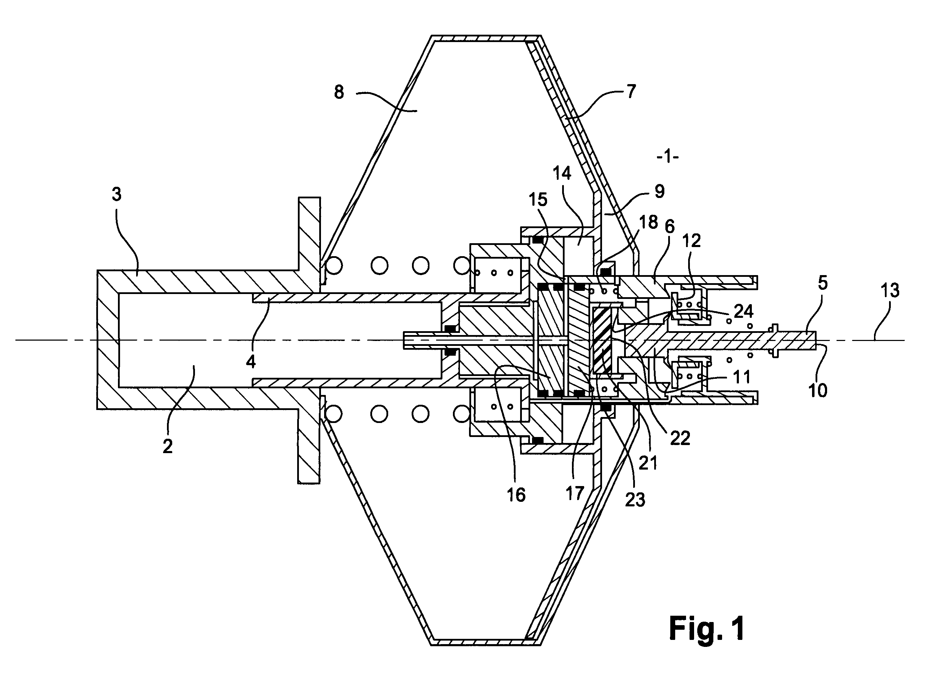

La figure 1 illustre un servomoteur 1 pneumatique d'assistance de freinage d'un véhicule, selon l'invention.

Le servomoteur 1 pneumatique est apte à être relié à une chambre primaire 2 d'un maître cylindre 3 dudit véhicule. Le servomoteur 1 permet d'amplifier un effort de freinage via un circuit hydraulique de freinage (non représenté). Un circuit hydraulique de freinage comprend le maître cylindre 3, au moins un conduit hydraulique (non représenté) et au moins un dispositif de freinage (non représenté). Le maître cylindre 3 comprend la chambre primaire 2 et un piston primaire 4, et avantageusement, une chambre secondaire et un piston secondaire (non représentés). Le servomoteur 1 est relié au piston primaire 4 qu'il entraîne en déplacement après avoir été sollicité par une pédale de frein (non représentée).

Le conduit hydraulique relie l'intérieur de la chambre primaire 2 au dispositif de freinage. Typiquement, le dispositif de freinage est formé par une garniture de frein (non représentée) et une surface de frottement (non représenté). La surface de frottement peut être liée en rotation à une roue du véhicule tandis que la garniture de frein est montée fixe sur un autre support fixe. La garniture de frein peut alors être déplacée par la pression hydraulique générée par le maître cylindre et par le servomoteur afin de se rapprocher de sa surface de frottement lorsqu'un freinage est commandé.

La garniture de frein est alors amenée au contact de la surface de frottement ce qui entraîne un ralentissement, voire un arrêt de la rotation de la roue concernée.

Plus précisément, le servomoteur 1 comporte une tige de poussée 5, un équipage mobile 6, une jupe étanche 7, une chambre avant 8 connectable à une source de vide et une chambre arrière 9 connectable à une source haute pression, typiquement de l'air à la pression atmosphérique.

La tige de poussée 5 est reliée à la pédale de frein par une extrémité 10 et à l'équipage mobile 6 par une extrémité opposée 11. L'équipage mobile 6 coulisse de manière étanche au travers de la jupe 7 tout en étant relié au piston primaire 4 du maître cylindre 3. La jupe étanche 7 est déplacée en direction du maître cylindre 3 après appui sur la pédale de frein.

La chambre avant 8 et la chambre arrière 9 sont séparées par la jupe 7 de manière étanche.

Au repos, la tige de poussée 5 est placée en appui contre une butée 12 isolant la chambre arrière 9 de la source de haute pression. La butée 12 est formée par l'équipage mobile 6. La chambre avant 8 et la chambre arrière 9 communiquent et sont sous vide.

Au moment de l'appui du conducteur sur la pédale de frein, la communication entre la chambre avant 8 et la chambre arrière 9 est rompue. La tige de poussée 5 est entraînée en déplacement en direction du maître cylindre 3 entraînant alors un écart de la tige de poussée 5 par rapport à la butée 12. De l'air peut alors s'insérer au travers de l'espace ainsi libéré entre la tige de poussée 5 et la butée 12. L'air s'introduit alors dans la chambre arrière 9. Du fait de la différence de pression existant entre la chambre arrière 9 et la chambre avant 8, l'air introduit exerce une pression sur la jupe 7 entraînant le déplacement de la jupe 7 longitudinalement par rapport à un axe 13 de déplacement de la tige de poussée 5 en direction du maître cylindre 3. Cette pression prend le relais sur la force exercée par le pied du conducteur.

Selon l'invention, le servomoteur 1 comporte également un réservoir de fluide hydraulique 14 communiquant avec l'intérieur de la chambre primaire 2 du maître cylindre 3 via un canal 15.

Le réservoir 14 est formé par la jupe 7 et par l'équipage mobile 6. La jupe 7 et l'équipage mobile 6 coulissent l'un par rapport à l'autre tout en délimitant un espace 16 dont le volume varie en fonction de la position de la jupe rigide 7 par rapport à celle de l'équipage mobile 6.

Le canal 15 est formé au travers de l'équipage mobile 6 et débouche dans la chambre primaire 2 au travers du piston primaire 4.

Une valve 16 est également prévue. Cette valve 16 est montée sur l'équipage mobile 6 et plus précisément sur le canal 15.

Dans un exemple préféré de l'invention, cette valve 16 est sensible à la pression hydraulique régnant dans la chambre primaire 2. Dès qu'une valeur seuil de pression hydraulique est relevée dans la chambre primaire 2, la valve 16 entraîne la fermeture du canal 15.

La valve 16 est formée par une pièce coulissante 17 et par des moyens élastiques 18. La pièce 17 coulisse de manière étanche le long d'un corps cylindrique formé par l'équipage mobile 6.

La pièce coulissante 17 est montée en appui contre le corps cylindrique de l'équipage mobile 6 en direction du maître cylindre 3. Dans cette position, le canal 15 est ouvert et le réservoir 14 communique librement avec la chambre primaire 2.

Lorsqu'une pression seuil est obtenue dans la chambre primaire 2, alors la pièce coulissante 17 est déplacée en direction opposée au maître cylindre 3, ce qui entraîne la fermeture du canal 15.

La pièce coulissante 17 présente un conduit 19 qui est réalisé de telle manière à se positionner au regard du canal 15 pour autoriser le passage du fluide depuis le réservoir 14 vers la chambre primaire 2.

Lorsque la pièce coulissante 17 est déplacée suite à la pression seuil exercée sur cette même pièce 17, alors la pièce coulissante 17 est déplacée de telle manière que le conduit 19 ne se situe plus en regard du canal 15 et obture alors le passage du fluide depuis le réservoir 14 vers la chambre primaire 2.

Pour autoriser un tel déplacement, il est prévu un ressort 18 maintenant en appui élastique la pièce coulissante 17 contre le corps cylindrique tant que la pression hydraulique seuil régnant dans la chambre primaire 2 et s'exerçant sur la pièce coulissante 17 n'a pas été atteinte.

Sur la pièce coulissante 17, est monté un disque de réaction 21 comprenant un matelas amortisseur 22 et une coupelle 23 recevant ledit matelas 22. La tige de poussée 5 et l'équipage mobile 6 sont destinés à venir s'appuyer contre ce matelas 22 au cours de la phase de freinage. Pour ce faire, l'équipage mobile 6 forme un épaulement interne 24 venant s'appuyer contre le matelas 22. La tige de poussée 5 s'appuie contre le matelas 22 par son extrémité 11.

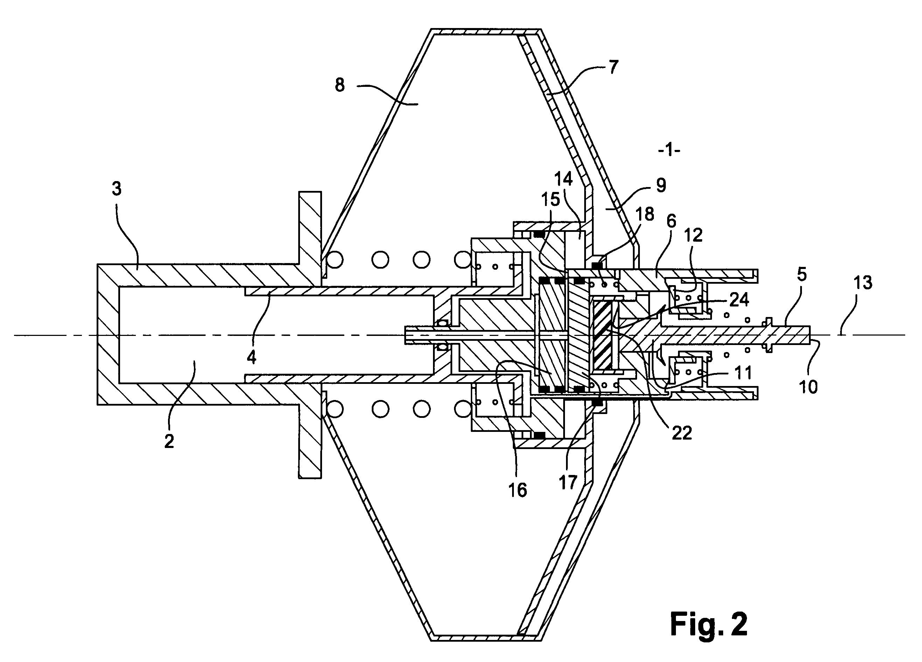

Le fonctionnement d'un tel servomoteur selon l'invention est le suivant, figures 2 à 5.

Figure 2, suite à l'appui du conducteur sur la pédale de frein, la tige de poussée 5 est entraînée en déplacement en direction du maître cylindre 3. Il se produit une arrivée d'air dans la chambre arrière 9 entraînant le déplacement de la jupe 7 en direction du maître cylindre 3. A ce moment là, la jupe 7 et l'équipage mobile 6 sont indépendant l'un de l'autre, et la jupe 7 coulisse par rapport à l'équipage mobile 6. Le volume du réservoir 14 se réduit.

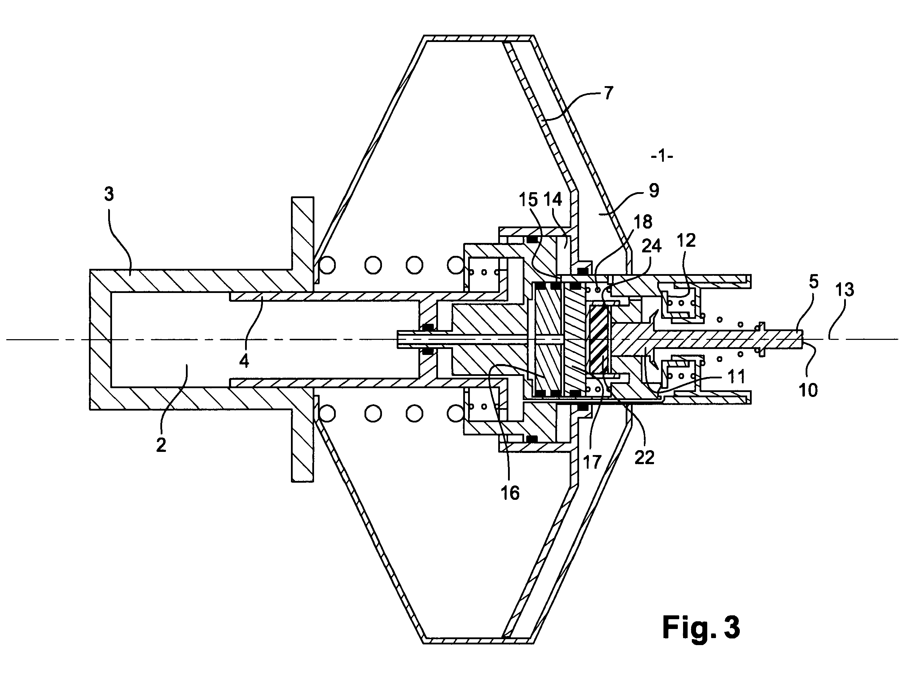

Figure 3, la pression hydraulique régnant dans la chambre primaire 2 augmente alors, entraînant le déplacement de la pièce coulissante 17 par rapport à l'équipage mobile 6 en direction opposée à celle du maître cylindre 3. Le canal 15 se ferme. A ce moment là, la jupe 7 et l'équipage mobile 6 sont liés l'un à l'autre. Le disque de réaction 21 est également entraîné en direction opposée du maître cylindre 3.

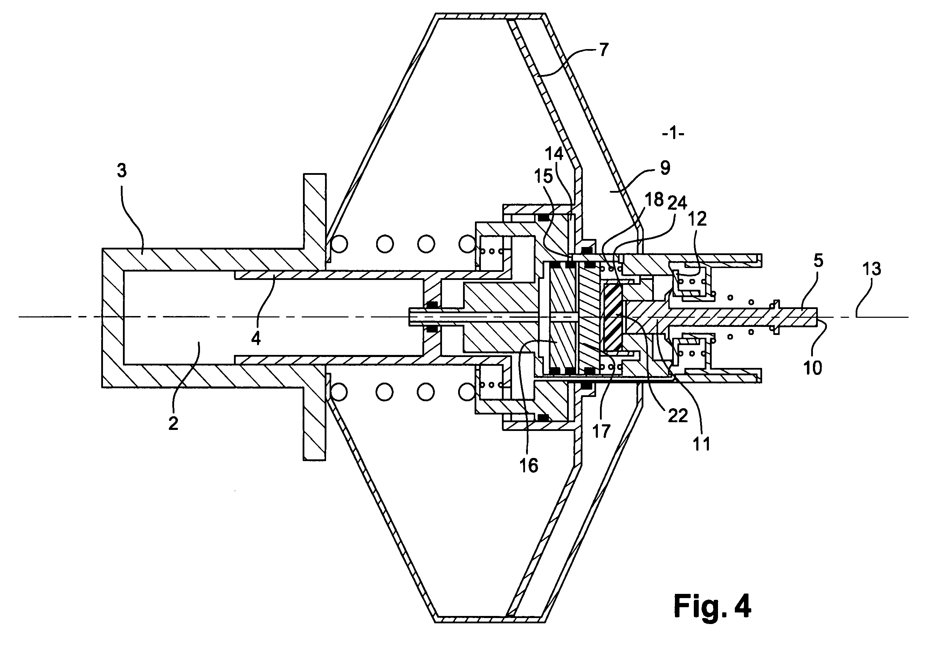

Figure 4, l'équipage mobile 6 est alors également entraîné en déplacement en direction du maître cylindre 3. Le matelas 22 et l'épaulement 24 de l'équipage mobile 6 finissent par se rencontrer. L'épaulement 24 vient s'appuyer contre une périphérie externe du matelas 22.

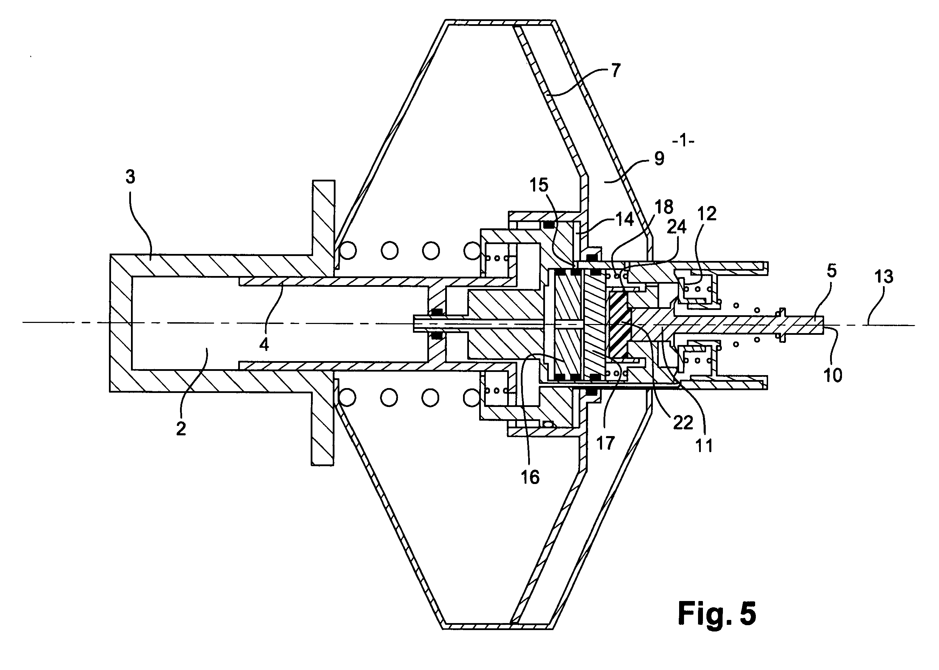

Puis figure 5, l'équipage mobile 6 en s'enfonçant encore plus profondément en direction du maître cylindre fini également par provoquer le contact de l'extrémité 11 de la tige de poussée 5 avec le centre du matelas 22 tandis que l'épaulement 24 s'enfonce dans le matelas 22.

Lorsque le servomoteur retourne dans sa position de repos, tous les éléments précédemment décrit se replacent progressivement vers leur position initiale.

## Revendications

1. Servomoteur (1) d'assistance de freinage d'un véhicule apte à être relié à un maître cylindre (3) dudit véhicule, ledit servomoteur comportant
- une tige de poussée (5),
- un équipage mobile (6),
- une jupe étanche (7),
- une chambre avant (8) et une chambre arrière (9) séparées par la jupe de manière étanche, la tige de poussée étant reliée à une pédale de frein par une extrémité (10) et à l'équipage mobile par une extrémité opposée (11), ledit équipage mobile coulissant de manière étanche au travers de la jupe tout en étant relié à un piston primaire (4) du maître cylindre, la jupe étanche étant déplacée en direction du maître cylindre après appui sur la pédale de frein, **caractérisé en ce qu'**il comporte
- un réservoir (14) de fluide hydraulique communiquant avec l'intérieur d'une chambre primaire du maître cylindre via un canal (15), et
- un moyen de fermeture (16,17,18) du canal dont le fonctionnement est dépendant de la pression hydraulique régnant dans la chambre primaire et **en ce que** le réservoir est formé par la jupe et l'équipage mobile, la jupe et l'équipage mobile coulissants l'un par rapport à l'autre tout en délimitant un espace dont le volume varie en fonction de la position de la jupe rigide par rapport à celle de l'équipage mobile.

2. Servomoteur selon la revendication 1, **caractérisé en ce que**
- l'équipage mobile comporte un corps cylindrique au travers duquel est formé le canal, ledit canal débouchant depuis le réservoir vers la chambre primaire au travers du piston primaire et le moyen de fermeture du canal est formé par une valve qui est montée sur le corps et qui est déplaçable au-delà d'une pression hydraulique seuil s'exerçant sur ladite valve de manière à entraîner la fermeture du canal.

3. Servomoteur selon la revendication 2, **caractérisé en ce que** la valve est placée sur le canal et est formée par une pièce coulissante (17) et par des moyens élastiques (18), lesdits moyens élastiques étant configurés de telle manière qu'ils maintiennent la pièce coulissante en appui contre le corps pour autoriser l'ouverture du canal, et qu'ils autorisent le déplacement de la pièce coulissante pour fermer le canal au-delà d'une pression hydraulique seuil s'exerçant sur ladite pièce coulissante.

4. Servomoteur selon la revendication 3, **caractérisé en ce que** les moyens élastiques sont formés par un ressort situé entre le corps et la pièce coulissante.

## Patentansprüche

1. Bremshilfe-Servomotor (1) eines Fahrzeugs, der mit einem Hauptzylinder (3) des Fahrzeugs verbunden werden kann, wobei der Servomotor aufweist
- eine Schubstange (5),
- ein bewegliches Teil (6),
- eine dichte Schürze (7),
- eine vordere Kammer (8) und eine hintere Kammer (9), die von der Schürze dicht getrennt werden, wobei die Schubstange über ein Ende (10) mit einem Bremspedal und über ein gegenüberliegendes Ende (11) mit dem beweglichen Teil verbunden ist, wobei das bewegliche Teil dicht durch die Schürze gleitet und dabei mit einem Primärkolben (4) des Hauptzylinders verbunden ist, wobei die dichte Schürze nach Drücken auf das Bremspedal in Richtung des Hauptzylinders verschoben wird, **dadurch gekennzeichnet, dass** er aufweist
- einen Hydraulikfluidbehälter (14), der mit dem Inneren einer Primärkammer des Hauptzylinders über einen Kanal (15) in Verbindung steht, und
- eine Schließeinrichtung (16, 17, 18) des Kanals, deren Betrieb vom in der Primärkammer herrschenden Hydraulikdruck abhängt, und dass der Behälter von der Schürze und vom beweglichen Teil geformt wird, wobei die Schürze und das bewegliche Teil zueinander gleiten und dabei einen Raum begrenzen, dessen Volumen abhängig von der Stellung der steifen Schürze bezüglich derjenigen des beweglichen Teils variiert.

2. Servomotor nach Anspruch 1, **dadurch gekennzeichnet, dass**
- das bewegliche Teil einen zylindrischen Körper aufweist, durch den hindurch der Kanal geformt ist, wobei der Kanal vom Behälter zur Primärkammer durch den Primärkolben mündet, und die Schließeinrichtung des Kanals von einem Ventil geformt wird, das auf den Körper montiert und über einem hydraulischen Schwellendruck verschiebbar ist, der auf das Ventil ausgeübt wird, um das Schließen des Kanals zu bewirken.

3. Servomotor nach Anspruch 2, **dadurch gekennzeichnet, dass** das Ventil auf dem Kanal angeordnet ist und von einem gleitenden Bauteil (17) und von elastischen Einrichtungen (18) geformt wird, wobei die elastischen Einrichtungen so konfiguriert sind, dass sie das gleitende Bauteil in Auflage gegen den Körper halten, um die Öffnung des Kanals zu erlauben, und dass sie die Verschiebung des gleitenden Bauteils erlauben, um den Kanal über einem hydraulischen Schwellendruck zu schließen, der auf das gleitende Bauteil ausgeübt wird.

4. Servomotor nach Anspruch 3, **dadurch gekennzeichnet, dass** die elastischen Einrichtungen von einer Feder geformt werden, die sich zwischen dem Körper und dem gleitenden Bauteil befindet.

## Claims

1. Brake booster (1) of a vehicle which is able to be connected to a master cylinder (3) of the said vehicle, the said booster comprising
- a thrust rod (5),
- moving gear (6),
- a sealed skirt (7),
- a front chamber (8) and a rear chamber (9) which are separated by the skirt in a sealed manner, the thrust rod being connected to a brake pedal by one end (10) and to the moving gear by an opposite end (11), the said moving gear sliding in a sealed manner through the skirt while being connected to a primary piston (4) of the master cylinder, the sealed skirt being moved in the direction of the master cylinder after pressing on the brake pedal, **characterized in that** it comprises
- a hydraulic fluid reservoir (14) communicating with the interior of a primary chamber of the master cylinder via a channel (15), and
- a means (16, 17, 18) for closing the channel whose operation is dependent on the hydraulic pressure prevailing in the primary chamber, and **in that** the reservoir is formed by the skirt and the moving gear, the skirt and the moving gear sliding with respect to one another while delimiting a space whose volume varies according to the position of the rigid skirt with respect to that of the moving gear.

2. Booster according to Claim 1, **characterized in that**
- the moving gear comprises a cylindrical body through which the channel is formed, the said channel emerging from the reservoir towards the primary chamber through the primary piston and the means for closing the channel is formed by a valve which is mounted on the body and which is movable above and beyond a threshold hydraulic pressure exerted on the said valve so as to bring about the closure of the channel.

3. Booster according to Claim 2, **characterized in that** the valve is placed on the channel and is formed by a sliding part (17) and by elastic means (18), the said elastic means being configured in such a way that they maintain the sliding part in bearing contact against the body to allow the opening of the channel, and that they allow the movement of the sliding part in order to close the channel above and beyond a threshold hydraulic pressure exerted on the said sliding part.

4. Booster according to Claim 3, **characterized in that** the elastic means are formed by a spring situated between the body and the sliding part.
